# EUROPEAN PATENT APPLICATION

(11) **EP 4 723 356 A1**
(43) Date of publication of application: **08.04.2026**
(21) Application number: 25200035.1
(22) Date of filing: 03.09.2025
(51) Int. Cl.: H01M 50/507, H01M 50/514, H01M 50/536

(54) **BUSBAR HOLDER AND BATTERY MODULE INCLUDING SAME**

(30) Priority: 09.09.2024 KR 20240122319
(71) Applicant: SAMSUNG SDI CO., LTD., Yongin-si, Gyeonggi-do 17084 (KR)
(72) Inventor: KIM, Gangyul, 17084 Yongin-si (KR)
(74) Representative: Regimbeau

(57) **Abstract**

A busbar holder (200) includes: a bridge portion (240) between a plurality of through holes into which a busbar (30) is inserted; and a buffer portion (220, 230) extending inwardly from one side surface (280, 290) of a through hole from among the through holes, and having an upwardly bent shape, the one side surface (280, 290) facing the bridge portion (240).

## Description

### BACKGROUND

### 1. Field

Aspects of embodiments of the present disclosure relate to a busbar holder for accommodating a busbar electrically connecting battery cells to each other, and a battery module including the busbar holder.

### 2. Description of the Related Art

Unlike primary batteries that are not designed to be recharged, secondary batteries may be designed to be discharged and recharged. Low-capacity secondary batteries are used in portable, small electronic devices, such as smart phones, feature phones, notebook computers, digital cameras, and camcorders. Large-capacity secondary batteries are widely used as power sources for driving motors in hybrid vehicles and electric vehicles, and for storing power. A secondary battery includes an electrode assembly including (e.g., consisting of) a positive electrode and a negative electrode, a case that accommodates the electrode assembly, and electrode terminals connected to the electrode assembly. The electrode terminals are electrically connected to busbars, and the busbars may be fixed by a busbar holder. Depending on a volume change of the secondary battery, positions of the busbars and the busbar holder may also change.

The above information disclosed in this Background section is for enhancement of understanding of the background of the present disclosure, and therefore, it may contain information that does not constitute related (or prior) art.

### SUMMARY

According to the invention, there is provided a busbar holder and a battery module as defined in the claims.

Aspects of embodiments of the present disclosure may be directed to a battery module.

Aspects of embodiments of the present disclosure may be directed to a battery module that may absorb an impact caused by a volume change of a battery cell, and a busbar holder that may buffer a collision of a busbar of the battery module.

These and other aspects and features of the present disclosure will be described in or will be apparent from the following description of embodiments of the present disclosure.

According to one or more embodiments of the present disclosure, a battery module includes: a plurality of battery cells stacked along one direction; at least one busbar electrically connecting the battery cells to each other, and including: a plurality of base portions; and a connecting portion having a step between the base portions; and a busbar holder above the battery cells, and including: a bridge portion between a plurality of through holes into which the base portions are inserted; and a buffer portion extending inwardly from one side surface of a through hole from among the through holes, and having an upwardly bent shape, the one side surface facing the bridge portion.

In an embodiment, the buffer portion may include a first buffer portion and a second buffer portion, the through holes may include a first through hole and a second through hole, the first buffer portion may be located on the one side surface of the first through hole facing the bridge portion, and the second buffer portion may be located in the second through hole that shares the bridge portion with the first through hole, and may face the first buffer portion.

In an embodiment, the buffer portion may include: a first extension portion extending upwardly from the one side surface of the through hole; a second extension portion extending from the first extension portion toward an inside of the through hole; and a third extension portion extending downwardly from the second extension portion. A buffer space may be located between the first extension portion and the third extension portion.

In an embodiment, an outer surface of the third extension portion may include a stepped portion configured to accommodate one end of the busbar.

In an embodiment, the third extension portion may have an elasticity and may be configured to change a width of the buffer space according to a movement of the busbar.

In an embodiment, the busbar holder may further include a plate, and a thickness of the first extension portion may be about 80% to about 90% of a thickness of the plate.

In an embodiment, a thickness of the second extension portion may correspond to a thickness of the first extension portion.

In an embodiment, a width of the buffer space may correspond to a maximum displacement distance due to a swelling of a battery cell.

In an embodiment, a thickness of the third extension portion may be about 80% to about 90% of a thickness of the first extension portion.

In an embodiment, the second extension portion may include an inclined surface inclined toward an inside of the through hole, the inclined surface having an inclination angle of 30° to 45° toward the inside of the through hole.

In an embodiment, a length of the stepped portion may be longer than a thickness of the busbar.

In an embodiment, a thickness of the stepped portion may be approximately 50% of a thickness of the third extension portion.

In an embodiment, the buffer portion may include a first buffer portion and a second buffer portion, the first buffer portion may be located on the one side surface of a first through hole from among the through holes, and the second buffer portion may be located in a second through hole from among the through holes that shares the bridge portion with the first through hole, and may face the first buffer portion in a facing direction parallel to the one direction.

In an embodiment, the bridge portion may be located below the connecting portion of the busbar.

an embodiment, the facing direction of the first buffer portion and the second buffer portion may be parallel to a direction in which a volume of the battery cell expands due to swelling.

According to some embodiments of the present disclosure, damage to a welding of a busbar due to a volume change of a battery cell may be prevented or substantially prevented, and an excellent insulation effect may be provided.

According to some embodiments of the present disclosure, because a stepped portion may be formed in a buffer portion of the busbar holder, the busbar may be more easily fixed without using a separate fixing member during a process of assembling the busbar to the busbar holder.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing an example of a battery cell according to an embodiment of the present disclosure;
FIG. 2 illustrates a perspective view showing an example of a battery module according to an embodiment of the present disclosure;
FIG. 3 illustrates an enlarged perspective view of the region A of FIG. 2;
FIG. 4 illustrates a perspective view showing an example of a busbar according to an embodiment of the present disclosure;
FIG. 5 illustrates a perspective view showing an example of a busbar holder having a buffer portion formed in an X-axis direction according to an embodiment of the present disclosure;
FIG. 6 illustrates a sectional view showing an example of a region of a buffer portion in more detail according to an embodiment of the present disclosure;
FIG. 7 illustrates a sectional view showing an example of a dimension of a buffer portion according to an embodiment of the present disclosure;
FIG. 8 illustrates a sectional view showing an example of a curvature radius of a buffer portion according to an embodiment of the present disclosure;
FIG. 9 illustrates a perspective view showing a busbar that is being assembled into a busbar holder having a stepped portion formed therein according to an embodiment of the present disclosure;
FIG. 10 illustrates a sectional view showing an example of a busbar holder in which a width of a buffer space is elastically changed by cell swelling according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in some embodiments to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In some embodiments, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In some embodiments, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

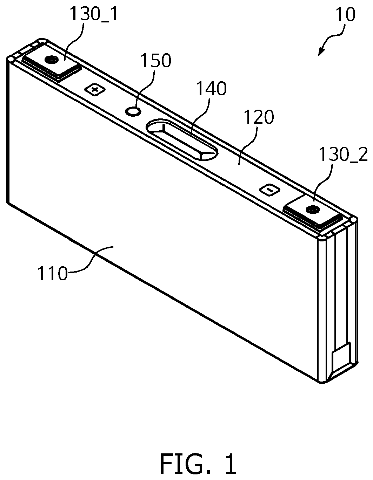

FIG. 1 illustrates a perspective view showing an example of a battery cell according to an embodiment of the present disclosure.

A battery cell 10 may include at least one electrode assembly that is wound or stacked with a separator, which is an insulator, provided between a positive electrode and a negative electrode. The battery cell 10 may further include a case 110 in which the electrode assembly is built or accommodated, and a cap plate 120 connected to (e.g., joined to or attached to) one opened end of the case 110. The battery cell 10 shown in FIG. 1 may be a kind of secondary battery. The structure of the battery cell 10 is not limited to that illustrated in FIG. 1, and may be variously modified as needed or desired.

The electrode assembly may be formed by sequentially winding or stacking a negative electrode plate, a separator, and a positive electrode plate. A negative electrode active material, such as graphite or carbon, may be applied or coated onto a negative electrode plate including (e.g., made of) a metal foil, such as copper, a copper alloy, nickel, or a nickel alloy. An active material, such as a transition metal oxide, may be applied or coated onto a positive electrode plate including (e.g., made of) a metal foil, such as aluminum or an aluminum alloy. An uncoated portion, which is a region where no active material is applied, may be formed on each of the negative electrode plate and the positive electrode plate. A negative electrode tab may be connected to a negative electrode uncoated portion, and a positive electrode tab may be connected to a positive electrode uncoated portion. The negative electrode tab and the positive electrode tab may be electrically connected to a negative electrode terminal and a positive electrode terminal, respectively, formed on the cap plate 120. The positive electrode terminal and the negative electrode terminal formed on the cap plate 120 may be electrically connected to a busbar.

The case 110 may form the overall outer appearance of the battery cell 10 and may be made of a conductive metal, such as aluminum, aluminum alloy, or nickel-plated steel. In some embodiments, the case 110 may provide a space in which the electrode assembly is accommodated. According to an embodiment of the present disclosure, the case 110 may be a prismatic case, and the battery cell 10 may be a prismatic battery cell. However, the present disclosure is not limited thereto, and the battery cell 10 may be any suitable kind of battery cell, such as a prismatic kind, a cylindrical kind, or a pouch kind.

The cap plate 120 may be connected to (e.g., joined to or attached to) the opened end of the case 110 to seal the case 110. Each of the case 110 and the cap plate 120 may include (e.g., may be made of) a conductive material. According to an embodiment, the upper end of the case 110 may be opened, and the cap plate 12 may seal the opened upper end of the case 110.

A positive electrode terminal 130_1 electrically connected to the positive electrode and a negative electrode terminal 130_2 electrically connected to the negative electrode may be connected to (e.g., joined to or attached to) the cap plate 120. For example, the positive and negative electrode terminals 130_1 and 130_2 may be installed to protrude outwardly through the cap plate 120.

According to an embodiment, a vent portion 140 may be formed on at least one surface of the battery cell 10. In FIG. 1, the vent portion 140 may be formed on the upper surface of the battery cell 10 (e.g., on the cap plate 120). The vent portion 140 may be opened in a case where an internal pressure higher than a threshold pressure (e.g., a predefined or predetermined threshold pressure) is detected in the battery cell 10.

In an embodiment of the present disclosure, the cap plate 120 may include an electrolyte injection port 150. For example, the electrolyte injection port 150 may be a through hole formed in the cap plate 120. After the cap plate 120 is connected to (e.g., joined to or attached to) the opening of the case 110 and then sealed, the electrolyte injection port 150 may be formed to inject an electrolyte into the case 110. The electrolyte injection port 150 may be sealed with a sealing member after the electrolyte is injected.

The battery cell 10 may be a lithium battery cell, a sodium battery cell, or the like. However, the present disclosure is not limited thereto, and the battery cell 10 may include any suitable battery that is capable of repeatedly providing electricity through charging and discharging. In an embodiment, in a case where the battery cell 10 is a lithium battery cell, the lithium battery cell may be used in electric vehicles (EVs) because of its excellent lifespan characteristics and high rate characteristics. In some embodiments, the lithium battery cell may be used in EVs, such as plug-in hybrid electric vehicles (PHEVs). The lithium battery cell may be used in any suitable field that requires or desires a large amount of power storage. For example, the lithium battery cell may be used in electric bicycles, power tools, and the like.

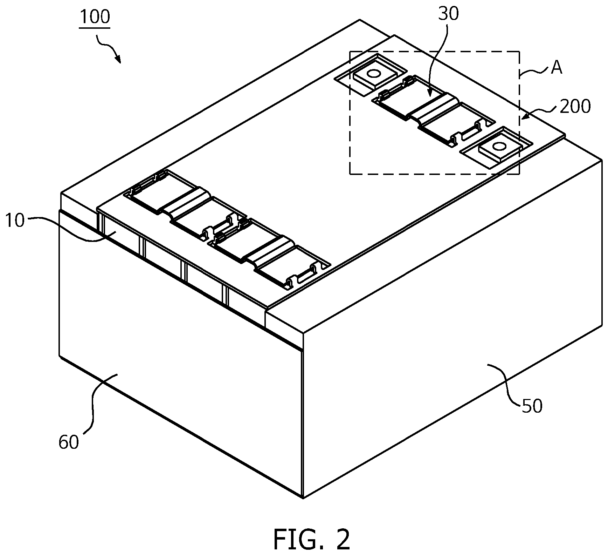

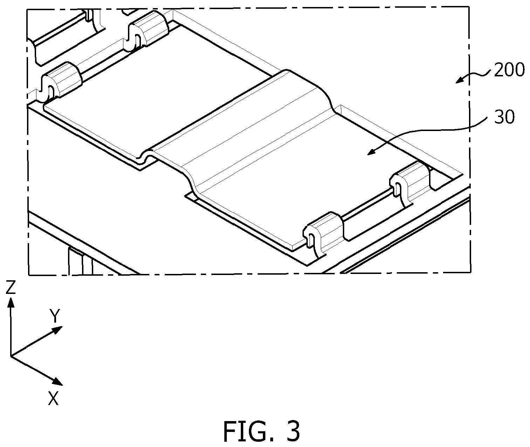

FIG. 2 illustrates a perspective view showing an example of a battery module 100 according to an embodiment of the present disclosure. FIG. 3 illustrates an enlarged perspective view of the region A of FIG. 2.

Referring to FIGS. 2 and 3, the battery module 100 according to some embodiments of the present disclosure may include a cell stack including a plurality of battery cells 10, frames 50 and 60 that accommodate the cell stack, a busbar 30, and a busbar holder 200. In an embodiment, the battery module 100 may be referred to as a battery pack. In some embodiments, the battery module 100 may be included in a vehicle. For convenience of illustration, FIG. 2 shows four battery cells 10, but the present disclosure is not limited thereto. Any suitable number of battery cells 10 may form the cell stack, and the cell stack may be included in the battery module 100. In some embodiments, the number and the arrangement of battery cells 10 are not limited to those shown in FIG. 2, and may be variously modified as needed or desired.

The battery module 100 may include the cell stack. The cell stack may include the plurality of battery cells 10 stacked along one direction. According to an embodiment, the battery cells 10 in the cell stack may be disposed along one direction, so that wide surfaces thereof face each other.

The cell stack may be accommodated in the frames 50 and 60. According to an embodiment, the frames 50 and 60 may include a pair of side plates 60 positioned on opposite side surfaces of the cell stack, a pair of end plates 50 orthogonally connected to the side plates 60 to support an outermost surface along one direction of the cell stack (e.g., the arrangement direction of the battery cells 10), an end insulation cover between the cell stack and the end plates 50, and a top plate on the cell stack. In some embodiments, a bottom plate may be provided at the bottom of the cell stack to support the cell stack from below. Cell stacks, the busbar 30, the busbar holder 200, and the like may be provided on the frames 50 and 60.

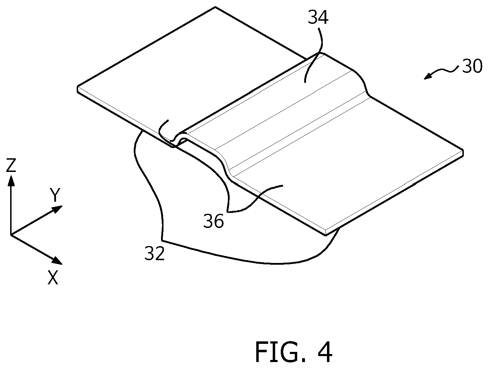

According to an embodiment of the present disclosure, the busbar holder 200 may include at least one through hole into which the busbar 30 is inserted, a bridge portion positioned between the through holes, and a buffer portion extending inwardly from one side surface of the through hole opposite to the bridge portion and having an upwardly bent shape. This is described in more detail below with reference to FIGS. 4 to 10.

The busbar holder 200 may support a plurality of busbars. The busbars 30 may be electrically connected to the battery cells 10. The busbars 30 may be electrically connected to a circuit board on which various circuits and components are mounted.

The busbar holder 200 may be positioned above the battery cells as shown in FIG. 2, and may support the busbars 30. The busbar holder 200 may be positioned above the top plate. For example, the busbar holder 200 may be an approximately rectangular plate, and may include (e.g., may be made of) an insulating material.

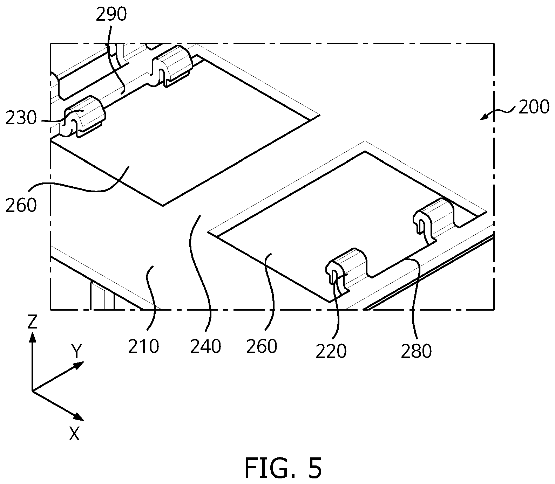

A plurality of through holes 260 (e.g., see FIG. 5) through which the positive electrode terminal and the negative electrode terminal of the cap plate are exposed may be formed in the busbar holder 200. The positive electrode terminal and the negative electrode terminal may be exposed through the through holes 260 formed in the busbar holder 200, and the busbars 30 may be electrically connected to the exposed positive electrode terminal and the exposed negative electrode terminal.

The busbar 30 may be electrically connected to the positive electrode terminal and the negative electrode terminal. The busbars 30 may connect the battery cells 10 in series and/or in parallel with each other. As such, the busbars 30 may be provided. According to an embodiment, the busbar 30 may electrically connect the positive electrode terminal of the battery cell 10 to the negative electrode terminal of another battery cell 10. The busbar 30 may electrically connect the negative electrode terminal of the battery cell 10 to the positive electrode terminal of another battery cell 10. The busbar 30 may be connected to the positive electrode terminal and/or the negative electrode terminal by welding or the like. Regions of the battery cell 10 other than the positive electrode terminal and the negative electrode terminal may be insulated from the busbar 30 by the busbar holder 200. A circuit board may be provided between the busbar 30 and an upper cover, and the busbar 30 may be electrically connected to the circuit board.

FIG. 4 illustrates a perspective view showing an example of the busbar according to an embodiment of the present disclosure.

Referring to FIG. 4, the busbar 30 may include a plurality of base portions 36, and a connecting portion 34 formed to have a step between the base portions 36.

The base portion 36 of the busbar 30 may be electrically connected to the electrode terminals of the battery cells 10. The busbar 30 may include (e.g., may be made of) a metal material, such as aluminum or copper, so as to electrically connect to the battery cells 10.

The shape of the base portion 36 of the busbar may have a rectangular shape in a case of being viewed from the Z-axis direction (e.g., in a plan view). However, the present disclosure is not limited thereto, and the shape of the base portion 36 of the busbar 30 may have any suitable shape, such as a square shape or a semicircular shape. The base portion 36 of the busbar 30 may have a suitable shape corresponding to the through hole 260 (e.g., see FIG. 5) of the busbar holder 200. Accordingly, the base portion 36 of the busbar 30 may be inserted into the through hole 260 of the busbar holder 200.

The connecting portion 34 of the busbar 30 has a bent and protruding shape, and may be used to reinforce a rigidity of the busbar 30. In other words, an impact applied to the busbar 30 may be absorbed by an elastic structure of the connecting portion 34.

The connecting portion 34 of the busbar 30 may be seated on an upper portion of a bridge portion 240 (e.g., see FIG. 5) of the busbar holder 200, for example, so as to fix the busbar 30 in the X-axis direction. The connecting portion 34 of the busbar 30 may be formed in a suitable shape protruding from the base portion 36 of the busbar 30. Accordingly, the busbar 30 may include the base portions 36, and the connecting portion 34 having (e.g., formed to have) a step between the base portions 36.

According to an embodiment of the present disclosure, the length of the connecting portion 34 of the busbar 30 in the X-axis direction may be longer than the length of the bridge portion 240 (e.g., see FIG. 5) of the busbar holder 200 in the X-axis direction, and the connecting portion 34 of the busbar 30 may be formed to protrude higher in the Z-axis direction than the upper surface of the base portion 36 of the busbar 30. However, the size of the connecting portion 34 of the busbar 30 is not limited to that described above.

FIG. 5 illustrates a perspective view showing an example of the busbar holder having a buffer portion formed in the X-axis direction according to an embodiment of the present disclosure.

Referring to FIG. 5, the busbar holder 200 may include a plurality of through holes 260 into which the busbar 30 is inserted, a bridge portion 240 positioned between the through holes 260, and a buffer portion 220 and 230 extending inwardly from one side surface 280 of the through hole facing the bridge portion 240. The buffer portion 220 may have an upwardly bent shape from the one side surface 280. Similarly, another buffer portion 230 may extend inwardly from another side surface 290 of the through hole 260 facing the bridge portion 240, and the buffer portion 220 may have an upwardly bent shape from the other side surface 290.

The through hole 260 of the busbar holder 200 may be formed to be wider than an area of the busbar 30, and may be formed to correspond to a shape of the busbar 30. According to an embodiment, a difference in length between the through hole 260 of the busbar holder 200 and the busbar 30 in the X-axis direction may be formed to be greater than a difference in length in the Y-axis direction. The difference in length between the through hole 260 of the busbar holder and the busbar 30 in the X-axis direction may be determined by considering a volume change due to a swelling of the battery cell 10 during battery charging/discharging. As such, the welding of the electrode terminal of the battery cell 10 and the busbar 30 may be prevented or substantially prevented from being damaged.

The bridge portion 240 of the busbar holder 200 may be formed by plates 210 of the busbar holder 200, and the length of the bridge portion 240 of the busbar holder in the Y-axis direction may correspond to the length of the through hole 260 of the busbar holder in the Y-axis direction.

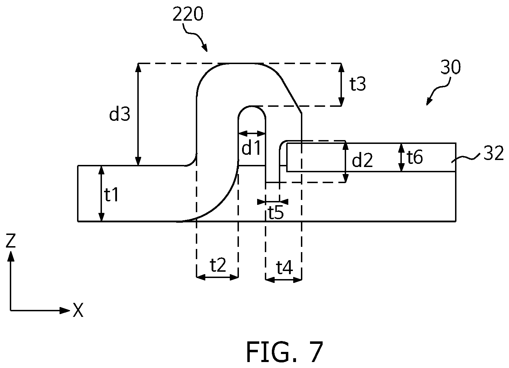

The buffer portions 220 and 230 of the busbar holder 200 may include a first extension portion extending upwardly (e.g., in the + Z-axis direction) from one side surface 280 (or from the other side surface 290) of the through hole, a second extension portion extending from the first extension portion toward the inside of the through hole 260 (e.g., in the X-axis direction), and a third extension portion extending downwardly (e.g., in the - Z-axis direction) from the second extension portion. A buffer space may be formed between the first extension portion and the third extension portion. This is described in more detail below with reference to FIGS. 7 to 10.

The busbar holder 200 may support the busbar 30 including a metal material so as to electrically connect to the battery cells 10. The busbar holder 200 may be formed by including an insulating material, so as to prevent or substantially prevent a short circuit due to a change in a position of the busbar 30 including the metal material. For example, the insulating material may include plastics or the like. As used herein, the term "support" does not necessarily mean that the busbar 30 and the bridge portion 240 are in contact with each other. It does not matter in a case where the busbar 30 and the bridge portion 240 are separated from each other and it does not matter in a case where the movement of the busbar 30 is restricted to some extent.

The buffer portions 220 and 230 of the busbar holder 200 may include a first buffer portion 220 and a second buffer portion 230. The first buffer portion 220 may be formed on the one side surface 280 of the first through hole 260, and the second buffer portion 230 may be formed on the other side surface 290 of the second through hole 260 that shares the bridge portion 240 with the first through hole 260 in which the first buffer portion 220 is formed. The second buffer portion 230 may be formed to face the first buffer portion 220. For example, the second buffer portion 230 may be formed on the other side surface 290 of the second through hole 260. According to an embodiment, the first buffer portion 220 may be formed on the one side surface 280 of the first through hole, and the second buffer portion 230 may be formed on the other side surface 290 facing the one side surface 280 of the first through hole 260.

A direction in which the first buffer portion 220 and the second buffer portion 230 face each other may be parallel to or substantially parallel to the stacking direction of the battery cells 10. For example, the facing direction of the first buffer portion 220 and the second buffer portion 230 may be parallel to or substantially parallel to the direction in which a volume of the battery cell 10 expands due to swelling. In a case where the busbar 30 moves due to the expansion of the battery cell 10, the busbar holder 200 may accommodate a displacement movement of the busbar 30 by the buffer portions 220 and 230 formed in the busbar holder 200.

The one side surface 280 of the first through hole 260 and the other side surface 290 of the second through hole 260 may face each other in a direction perpendicular to or substantially perpendicular to the extension direction of the bridge portion 240 of the busbar holder 200. The first through hole 260 and the second through hole 260 may share the bridge portion 240 with each other. The one side surface 280 of the first through hole 260 and the other side surface 290 of the second through hole 260 may be formed to face each other with the bridge portion 240 of the busbar holder 200 provided therebetween.

According to an embodiment, two first buffer portions 220 may be formed on the one side surface 280 of the first through hole 260, and two second buffer portions 230 may be formed on the other side surface 290 of the second through hole 260. However, the number of first buffer portions 220 and the number of second buffer portions 230 may be variously modified as needed or desired, and the number of first buffer portions 220 and the number of second buffer portions 230 may be variously determined according to a degree of the volume change due to swelling of the battery cell 10.

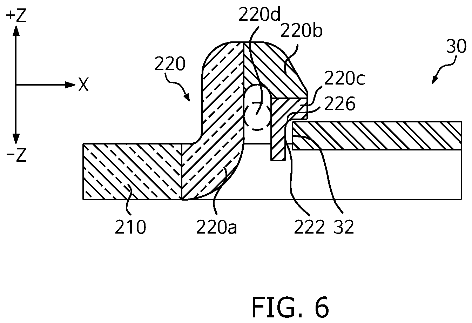

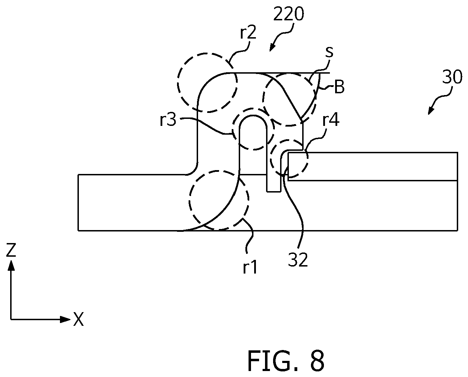

FIG. 6 illustrates a sectional view showing an example of a region of the buffer portion in more detail according to an embodiment of the present disclosure. FIG. 7 illustrates a sectional view showing an example of a dimension of the buffer portion according to an embodiment of the present disclosure. FIG. 8 illustrates a sectional view showing an example of a curvature radius of the buffer portion according to an embodiment of the present disclosure. For example, FIGS. 6 to 8 may be a plan view of a plane taken along a cross-section of the first buffer portion 220.

Referring to FIG. 6, the buffer portion 220 may include a first extension portion 220a extending upwardly (e.g., in the Z-axis direction) from one side surface of the through hole, a second extension portion 220b extending from the first extension portion 220a toward the inside of the through hole (e.g., in the X-axis direction), and a third extension portion 220c extending downwardly (e.g., in the Z-axis direction) from the second extension portion 220b. A buffer space 220d may be formed between the first extension portion 220a and the third extension portion 220c. One end of the busbar 30 may be accommodated on an outer surface 222 of the third extension portion 220c, and a stepped portion 226 that restricts a movement of the busbar 30 may be formed. The third extension portion 220c may have an elasticity so that a width d1 (e.g., see FIG. 7) of the buffer space 220d changes according to the movement of the busbar 30.

Referring to FIGS. 6 and 7, the thickness t2 of the first extension portion 220a of the busbar holder 200 may be about 80% to about 90% of the thickness t1 of the plate 210 of the busbar holder 200. The plate 210 of the busbar holder 200 and the first to third extension portions 220a, 220b, and 220c of the busbar holder 200 may be formed by injection-molding plastics or the like. Therefore, the thickness t2 of the first extension portion 220a of the busbar holder 200 may be determined (e.g., may be set) by considering the thickness that may be injected in the process of extending and injecting from the plate 210 of the busbar holder 200. According to an embodiment of the present disclosure, the thickness t1 of the plate 210 of the busbar holder 200 may be about 1.5 mm to about 1.67 mm, or about 1.5 mm to about 2.33 mm. The thickness t2 of the first extension portion 220a of the busbar holder 200 may be about 80% to about 90% of the thickness t1.

The thickness t3 of the second extension portion 220b of the busbar holder 200 may correspond to the thickness t2 of the first extension portion 220a. The thickness t3 of the second extension portion 220b may be determined (e.g., may be set) by considering a durability so as not to be damaged by the volume change due to the swelling of the battery cell 10. According to an embodiment of the present disclosure, the thickness t3 of the second extension portion 220b of the busbar holder 200 may have a thickness corresponding to the thickness t2 of the first extension portion 220a of the busbar holder 200.

The thickness t4 of the third extension portion 220c of the busbar holder 200 may be about 80% to about 90% of the thickness t2 of the first extension portion 220a. The thickness t4 of the third extension portion 220c may be determined (e.g., may be set) by considering a durability so as not to be damaged by the volume change due to the swelling of the battery cell. According to an embodiment of the present disclosure, the thickness t4 of the third extension portion 220c of the busbar holder 200 may correspond to about 80% to about 90% of the thickness t2.

With respect to the X-axis direction, the thickness t5 of the stepped portion 226 of the busbar holder 200 may be about 50% of the thickness t4 of the third extension portion 220c. The thickness t5 of the stepped portion 226 of the busbar holder 200 may be determined (e.g., may be set) by considering the movement or rotation of the busbar 30. According to an embodiment of the present disclosure, the thickness t5 of the stepped portion 226 of the busbar holder 200 may correspond to about 50% of the thickness t4.

With respect to the X-axis direction, the length (t4-t5) of the groove of the third extension portion 220c of the busbar holder 200 may be the length (t4-t5) obtained by subtracting the thickness t5 of the stepped portion 226 of the busbar holder from the thickness t4 of the third extension portion 220c of the busbar holder (e.g., t4 - t5). As the length of one side of the busbar 30 inserted into the stepped portion 226 of the busbar holder 200 increases, the busbar 30 may be stably fixed to the busbar holder 200, but the length of a groove of the stepped portion 226 of the busbar holder may be determined (e.g., may be set) by considering that the stepped portion 226 of the busbar holder may be damaged in a case of assembling the busbar 30 to the busbar holder 200. Therefore, with respect to the X-axis direction, the length of the groove of the busbar holder 200 may correspond to a value obtained by subtracting the thickness t5 from the thickness t4. With respect to the X-axis direction, the width d1 of the buffer space 220d of the busbar holder 200 may correspond to a maximum displacement distance due to the swelling of the battery cell 10. In order to prevent or substantially prevent damage to the welding of the busbar 30, the width d1 of the buffer space 220d of the busbar holder 200 may be determined (e.g., may be set) by considering the volume change due to the swelling of the battery cell 10. According to an embodiment of the present disclosure, the width d1 of the buffer space 220d of the busbar holder 200 may be about 1 mm to about 1.2 mm, which may be the maximum displacement distance of the battery cell 10.

With respect to the Z-axis direction, the length d2 of the stepped portion 226 of the busbar holder 200 may be longer than the thickness t6 of the side surface 32 of the busbar 30. The length d2 of the stepped portion 226 of the busbar holder 200 may be formed to be greater than the thickness t6 of the side surface 32 of the busbar 30, so as to fix the busbar 30 and prevent or substantially prevent movement in the Z-axis direction. According to an embodiment of the present disclosure, the length d2 of the stepped portion 226 of the busbar holder 200 with respect to the Z-axis direction may be about 1.2 mm to about 2 mm.

The length d3 from the upper surface of the plate 210 of the busbar holder 200 to the uppermost end of the buffer portion 220 of the busbar holder 200 with respect to the Z-axis direction may be determined (e.g., may be set) by considering the thicknesses of the first to third extension portions 220a, 220b, and 220c for a durability. According to an embodiment of the present disclosure, the length d3 from the upper surface of the plate 210 of the busbar holder 200 to the uppermost end of the buffer portion 220 of the busbar holder 200 with respect to the Z-axis direction may be about 3.7 mm to about 4.3 mm.

Referring to FIGS. 6 to 8, curved surfaces r1, r2, r3, and r4 of the buffer portion 220 of the busbar holder 200 may have an elasticity in a case where the first to third extension portions 220a, 220b, and 220c are moved, and may be determined (e.g., may be set) by considering a durability so that a stress may not be concentrated. According to an embodiment of the present disclosure, the curvature radius R of the curved surface r1 formed by the plate 210 of the busbar holder and the first extension portion 220a may be formed to be about 2.5R to about 3R, and the curvature radius R of the curved surface r2 formed by the first extension portion 220a and the second extension portion 220b may be formed to be about 1R to about 2R.

The curvature radius R of the curved surface r3 formed by the first extension portion 220a, the second extension portion 220b, and the third extension portion 220c may be formed to be approximately 50% of the width d1 of the buffer space 220d of the busbar holder 200. According to an embodiment of the present disclosure, the curvature radius R of the curved surface r3 formed by the first extension portion 220a, the second extension portion 220b, and the third extension portion 220c may be formed to be about 0.5R to about 0.6R.

The curvature radius R of the curved surface r4 of the stepped portion 226 of the third extension portion 220c may have an elasticity in a case where the side surface 32 of the busbar 30 is moved to be in contact with the stepped portion 226, and may be determined (e.g., may be set) by considering a durability so that stress may not be concentrated. According to an embodiment of the present disclosure, the curvature radius R of the curved surface r4 of the stepped portion 226 of the third extension portion 220c may be formed to be about 0.2R to about 0.3R. R represents the curvature radius (mm).

An inclined surface (s) that is inclined to have an inclination angle B toward the inside of the through hole of the second extension portion 220b (e.g., in the X-axis direction) may have a larger inclination angle B for easy assembly of the busbar 30 to the busbar holder 200, but may be determined (e.g., may be set) by considering a durability so as not to be damaged due to the volume change of the battery cell 10. According to an embodiment of the present disclosure, the inclined surface (s) inclined toward the inside of the through hole of the second extension portion 220b (e.g., in the X-axis direction) may be formed with an inclination angle B of 30° to 45° (e.g., with respect to the X-axis direction).

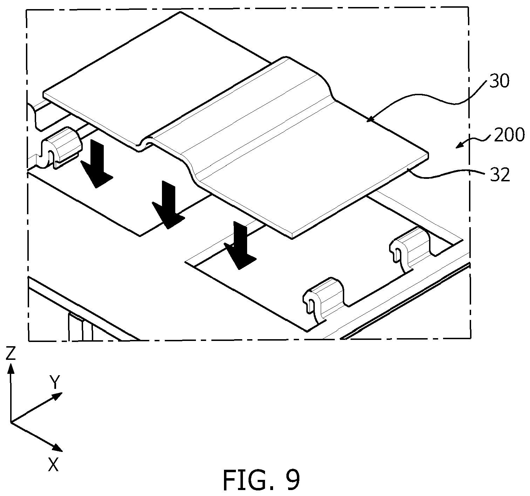

FIG. 9 illustrates a perspective view showing the busbar that is being assembled into the busbar holder having the stepped portion formed therein according to an embodiment of the present disclosure.

Referring to FIG. 9, the length of the busbar 30 in the X-axis direction may be formed longer than the length between the buffer portions of the busbar holder 200. Therefore, in order to easily mount the busbar 30 on the busbar holder 200, the inclined surface (s) of the second region of the buffer portion may be inclined toward the inside of the through hole (e.g., in the X-axis direction).

According to an embodiment of the present disclosure, in a case where a portion of the side surface 32 of the busbar 30 begins to contact the inclined surface (s) of the second region of the buffer portion, the third extension portion of the busbar holder 200 may be elastically moved in a direction in which the width d1 of the buffer space of the buffer portion decreases. After the busbar 30 is fully inserted into the busbar holder 200, the third extension portion of the busbar holder 200 may be elastically moved in a direction in which the width d1 of the buffer space of the buffer portion returns to an initial value. As such, the busbar 30 may be easily mounted on the busbar holder 200.

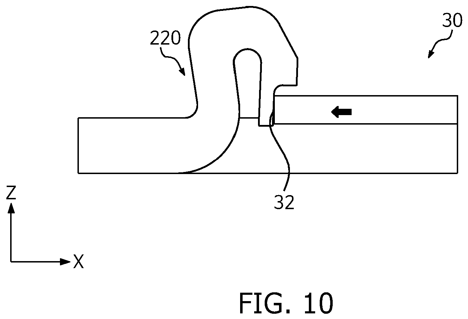

FIG. 10 illustrates a sectional view showing an example of the busbar holder in which the width of the buffer space is elastically changed by cell swelling according to an embodiment of the present disclosure. For example, FIG. 10 may be a plan view of a plane taken along a cross-section of the first buffer portion 220.

Referring to FIG. 10, a volume change may occur due to the swelling of the battery cell 10, causing the busbar 30 to elongate in the X-axis direction. In a case where a portion of the side surface 32 of the busbar begins to contact the outer surface of the stepped portion, the third extension portion of the busbar holder may be elastically moved in a direction in which the width d1 of the buffer space of the buffer portion decreases. As such, the volume change of the battery cell 10 may be absorbed, thereby preventing or substantially preventing damage to the welding of the busbar 30.

Although the present disclosure has been described above with respect to embodiments thereof, the present disclosure is not limited thereto. Various modifications and variations can be made thereto by those skilled in the art within the scope of the appended claims.

### Explanation of reference symbols

10: battery cell
110: case
120: cap plate
130: terminal
140: vent portion
150: electrolyte injection port
100: battery module
30: busbar
200: busbar holder
50: side plate
60: end plate
32: side surface
34: connecting portion
36: base portion

## Claims

1. A busbar holder (200) comprising:
a bridge portion (240) between a plurality of through holes (260) configured for insertion of a busbar (30); and
a buffer portion (220, 230) extending inwardly from one side surface (280, 290) of a through hole (260) from among the through holes (260), and having an upwardly bent shape, the one side surface (280, 290) facing the bridge portion (240).

2. The busbar holder as claimed in claim 1, wherein the buffer portion (220, 230) comprises a first buffer portion (220) and a second buffer portion (230),
the through holes (260) comprise a first through hole (260) and a second through hole (260),
the first buffer portion (220) is located on the one side surface (280) of the first through hole (260) facing the bridge portion (240), and
the second buffer portion (230) is located in the second through hole (260) that shares the bridge portion (240) with the first through hole (260), and faces the first buffer portion (220).

3. The busbar holder as claimed in claim 1 or claim 2, wherein the buffer portion (220, 230) comprises:
a first extension portion (220a) extending upwardly from the one side surface (280) of the through hole (260);
a second extension portion (220b) extending from the first extension portion (220a) toward an inside of the through hole (260); and
a third extension portion (220c) extending downwardly from the second extension portion (220b), and
wherein a buffer space (220d) is located between the first extension portion (220a) and the third extension portion (220c).

4. The busbar holder as claimed in claim 3, wherein an outer surface (222) of the third extension portion (220c) comprises a stepped portion (226) configured to accommodate one end of the busbar (30).

5. The busbar holder as claimed in claim 4, wherein a thickness of the stepped portion (226) is approximately 50% of a thickness of the third extension portion (220c).

6. The busbar holder as claimed in any one of claims 3 to 5, wherein the third extension portion (220c) has an elasticity and is configured to change a width of the buffer space (220d) according to a movement of the busbar (30).

7. The busbar holder as claimed in any one of claims 3 to 6, further comprising a plate (210), wherein a thickness of the first extension portion (220a) is about 80% to about 90% of a thickness of the plate (210).

8. The busbar holder as claimed in any one of claims 3 to 7, wherein a thickness of the second extension portion (220b) corresponds to a thickness of the first extension portion (220a).

9. The busbar holder as claimed in any one of claims 3 to 8, wherein a thickness of the third extension portion (220c) is about 80% to about 90% of a thickness of the first extension portion (220a).

10. The busbar holder as claimed in any one of claims 3 to 9, wherein the second extension portion (220b) comprises an inclined surface (S) inclined toward an inside of the through hole (260), the inclined surface (S) having an inclination angle of 30° to 45° toward the inside of the through hole (260).

11. A battery module (100) comprising:
a plurality of battery cells (10) stacked along one direction;
at least one busbar (30) electrically connecting the battery cells (10) to each other, and comprising:
a plurality of base portions (36); and
a connecting portion (34) having a step between the base portions (36); and
a busbar holder (200) according to any one of claims 1 to 10 above the battery cells (10),
wherein the base portions (36) are inserted into the plurality of through holes (260).

12. The battery module (100) as claimed in claim 11 comprising the busbar holder as claimed in claim 3, wherein a width of the buffer space (220d) corresponds to a maximum displacement distance due to a swelling of a battery cell (10).

13. The battery module (100) as claimed in claim 11 comprising the busbar holder as claimed in claim 4, wherein a length of the stepped portion (226) is longer than a thickness of the busbar (30).

14. The battery module (100) as claimed in any one of claims 11 to 13, wherein the bridge portion (240) is located below the connecting portion (34) of the busbar (30).

15. The battery module (100) as claimed in any one of claims 11 to 14, wherein the second buffer portion (230) faces the first buffer portion (220) in a facing direction parallel to the one direction and the facing direction of the first buffer portion (220) and the second buffer portion (230) is parallel to a direction in which a volume of the battery cell (10) expands due to swelling.
